# EUROPEAN PATENT APPLICATION

(11) **EP 4 668 418 A1**
(43) Date of publication of application: **24.12.2025**
(21) Application number: 25165564.3
(22) Date of filing: 24.03.2025
(51) Int. Cl.: H01M 50/102, H01M 50/166, H01M 50/169, H01M 50/107, H01M 50/152

(54) **BATTERY AND METHOD FOR MANUFACTURING SAME**

(30) Priority: 17.06.2024 KR 20240078563
(71) Applicant: SAMSUNG SDI CO., LTD., Yongin-si, Gyeonggi-do 17084 (KR)
(72) Inventor: YUN, JIWON, Yongin-si, Gyeonggi-do 17084 (KR)
(74) Representative: Gulde & Partner

(57) **Abstract**

A battery (100) includes an electrode assembly (110), a case (120, 200, 300, 400, 500, 600, 910, 1010, 1110) including a bottom portion, a sidewall portion connected to the bottom portion and including a seating portion (210, 310, 410, 510, 610, 912, 1012, 1112) at one end thereof, and an upper opening opposite to the bottom portion, the case (120, 200, 300, 400, 500, 600, 910, 1010, 1110) accommodating the electrode assembly (110), and a cap assembly (130, 220, 320, 420, 520, 620, 920, 1020, 1120) that is coupled to the seating portion (210, 310, 410, 510, 610, 912, 1012, 1112) of the case (120, 200, 300, 400, 500, 600, 910, 1010, 1110), wherein the cap assembly (130, 220, 320, 420, 520, 620, 920, 1020, 1120) includes at least one second engagement portion (222, 322, 422, 522, 622, 722, 822) for coupling with the case (120, 200, 300, 400, 500, 600, 910, 1010, 1110), the case (120, 200, 300, 400, 500, 600, 910, 1010, 1110) includes at least one first engagement portion (212, 312, 412, 512, 612, 712, 812, 914, 1014, 1114) respectively corresponding to the at least one second engagement portion (222, 322, 422, 522, 622, 722, 822), the seating portion (210, 310, 410, 510, 610, 912, 1012, 1112) including the at least one first engagement portion (212, 312, 412, 512, 612, 712, 812, 914, 1014, 1114), and the at least one first engagement portion (212, 312, 412, 512, 612, 712, 812, 914, 1014, 1114) and the at least one second engagement portion are coupled to restrict movement of the cap assembly (130, 220, 320, 420, 520, 620, 920, 1020, 1120) in an upward direction.

## Description

### BACKGROUND

### 1. Field

Aspects of embodiments of the present disclosure relate to a battery and a method for manufacturing the battery.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In a manufacturing process of the secondary battery, the electrode assembly is inserted into the case, and the cap assembly is then used to seal the case. For example, the cap assembly is positioned over an opening in the case, followed by an initial tack-welding of the case and the cap assembly. Subsequently, the case and the cap assembly are welded together along a shape of the cap assembly to completely seal the opening of the case. If the initial tack-welding of the case and the cap assembly is omitted, productivity in the manufacturing process of the secondary battery may be improved. However, this may also lead to issues such as the cap assembly becoming misaligned, resulting in reduced welding quality.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

In view of the above, embodiments of the present disclosure provide a battery and a method for manufacturing the battery in which the initial tack-welding step may be omitted.

These and other aspects and features of the present disclosure will be described in or will be apparent from the following description of embodiments of the present disclosure.

According to some embodiments of the present disclosure, a battery includes: an electrode assembly, a case including a bottom portion, a sidewall portion connected to the bottom portion and including a seating portion at one end thereof, and an upper opening opposite to the bottom portion, the case accommodating the electrode assembly, and a cap assembly that is coupled to the seating portion of the case. The cap assembly includes at least one second engagement portion for coupling with the case, the case includes at least one first engagement portion respectively corresponding to the at least one second engagement portion, the seating portion including the at least one first engagement portion, and the at least one first engagement portion and the at least one second engagement portion are coupled to restrict movement of the cap assembly in an upward direction.

In other words, the at least one first engagement portion and the at least one second engagement portion may be configured to, when coupled to each other, to restrict movement of the cap assembly in an upward direction. Upward direction may refer to a vertical axis extending in a direction parallel to the side wall and away from an interior of the battery.

In some embodiments, the first engagement portion and the second engagement portion may each have a complementary engagement structure formed with mutually corresponding shapes and sizes.

In some embodiments, the at least one second engagement portion of the cap assembly and the at least one first engagement portion of the case may be coupled through an interference fit. In other words, the at least one first engagement portion and the at least one second engagement portion may be configured to form an interference fit together. The battery may include an interference fit formed by the at least one first engagement portion and the at least one second engagement portion when coupled together.

In some embodiments, each of the at least one first engagement portion may include a protrusion having a protruding shape, and each of the at least one second engagement portion may include a receiving portion having a groove shape configured to receive the corresponding first engagement portion. In other words, the receiving portion of the at least one second engagement portion may have a groove shape configured to receive the protrusion of the corresponding first engagement portion or, in other words, the shape of the protrusion and the shape of the receiving portion may correspond to each other so that they fit together.

In some embodiments, the first engagement portion may include a plurality of protrusions on a vertical cross-section thereof, and the plurality of protrusions may be vertically arranged on the vertical cross-section of the first engagement portion. In some embodiments, the second engagement portion may include a plurality of receiving portions respectively corresponding to the plurality of protrusions on the vertical cross-section thereof, and the plurality of receiving portions.

In some embodiments, each of the at least one first engagement portion may include the protrusion, a first upper flat portion formed on an upper side of the protrusion, and a first lower flat portion formed on a lower side of the protrusion. In some embodiments, each of the at least one second engagement portion may include the receiving portion, a second upper flat portion formed on an upper side of the receiving portion, and a second lower flat portion formed on a lower side of the receiving portion. In a state where the at least one first engagement portion and the at least one second engagement portion are coupled together, or in other words where the corresponding first engagement portion, e. g. the corresponding protrusion, is received in the receiving portion, the protrusion may face the receiving portion, the first upper flat portion may face the second upper flat portion, and the first lower flat portion may face the second lower flat portion.

In some embodiments, each of the at least one second engagement portion may include a protrusion having a protruding shape, and each of the at least one first engagement portion may include a receiving portion having a groove shape configured to receive the corresponding second engagement portion. In other words, the receiving portion of the at least one first engagement portion may have a groove shape configured to receive the protrusion of the corresponding second engagement portion or, in other words, the shape of the protrusion and the shape of the receiving portion may correspond to each other so that they fit together.

In some embodiments, the second engagement portion may include a plurality of protrusions on a vertical cross-section thereof, and the plurality of protrusions may be vertically arranged on the vertical cross-section of the second engagement portion. In some embodiments, the first engagement portion may include a plurality of receiving portions respectively corresponding to the plurality of protrusions on the vertical cross-section thereof, and the plurality of receiving portions may be vertically arranged on the vertical cross-section of the first engagement portion.

In some embodiments, each of the at least one first engagement portion may include the receiving portion, a first upper flat portion formed on an upper side of the receiving portion, and a first lower flat portion formed on a lower side of the receiving portion. In some embodiments, each of the at least one second engagement portion may include the protrusion, a second upper flat portion formed on an upper side of the protrusion, and a second lower flat portion formed on a lower side of the protrusion. In a state where the at least one first engagement portion and the at least one second engagement portion are coupled together, or in other words where the corresponding second engagement portion, e. g. the corresponding protrusion, is received in the receiving portion, the receiving portion may face the protrusion, the first upper flat portion may face the second upper flat portion, and the first lower flat portion may face the second lower flat portion.

In some embodiments, the first upper flat portion and the first lower flat portion may be sloped such that the inner diameter of the case increases toward the top of the sidewall portion. In some embodiments, the second upper flat portion and the second lower flat portion may be sloped such that the outer diameter of the cap assembly increases toward the top.

In some embodiments, the first engagement portion may include at least one protrusion and at least one receiving portion, and the second engagement portion may include at least one receiving portion respectively corresponding to at least one protrusion of the first engagement portion and at least one protrusion respectively corresponding to at least one receiving portion of the first engagement portion.

In some embodiments, the at least one second engagement portion may be formed on an outer circumferential surface of the cap assembly, and the at least one first engagement portion may be formed on an inner circumferential surface of the seating portion. In other words, the outer circumferential surface of the cap assembly may include the at least one second engagement portion or the cap assembly may include the at least one second engagement portion disposed on the outer circumferential surface of the cap assembly. In other words, the inner circumferential surface of the seating portion may include the at least one first engagement portion or the seating portion may include the at least one first engagement portion disposed on the inner circumferential surface of the seating portion.

In some embodiments, each of the at least one second engagement portion may extend substantially continuously along at least a portion of the outer circumferential surface of the cap assembly, and each of the at least one first engagement portion may extend substantially continuously along at least a portion of the inner circumferential surface of the seating portion. The term "extending substantially" may refer to a feature that covers a significant but not necessarily complete section of the outer circumferential surface of the cap assembly or of the inner circumferential surface of the seating portion. This may span a dominant, partial, or predominantly planar portion of the considered area without necessarily covering the entire circumferential surfaces. "Essentially" may refer to a predominant or significant portion, but not necessarily the entire or exact extent along the given area. It allows for minor deviations or interruptions. In other words, each of the at least one first engagement portion and/or each of the at least one second engagement portion may extend at least by more than 30%, more than 45%, more than 60%, more than 75%, more than 85% or by 95% to 100% of the outer circumferential surface of the cap assembly or of the inner circumferential surface of the seating portion. In other words, the respective portion may correspond to the said values.

In some embodiments, the at least one second engagement portion may be formed on an inner circumferential surface of the cap assembly, and the at least one first engagement portion may be formed on an outer circumferential surface of the seating portion. In other words, the inner circumferential surface of the cap assembly may include the at least one second engagement portion or the cap assembly may include the at least one second engagement portion disposed on the inner circumferential surface of the cap assembly. In other words, the outer circumferential surface of the seating portion may include the at least one first engagement portion or the seating portion may include the at least one first engagement portion disposed on the outer circumferential surface of the seating portion.

In some embodiments, each of the at least one second engagement portion may be continuously formed along at least a portion of the inner circumferential surface of the cap assembly, and each of the at least one first engagement portion may be continuously formed along at least a portion of the outer circumferential surface of the seating portion. The term "extending substantially" may refer to a feature that covers a significant but not necessarily complete section of the inner circumferential surface of the cap assembly or of the outer circumferential surface of the seating portion. This may span a dominant, partial, or predominantly planar portion of the considered area without necessarily covering the entire circumferential surfaces. "Essentially" may refer to a predominant or significant portion, but not necessarily the entire or exact extent along the given area. It allows for minor deviations or interruptions. In other words, each of the at least one first engagement portion and/or each of the at least one second engagement portion may extend at least by more than 30%, more than 45%, more than 60%, more than 75%, more than 85% or by 95% to 100% of the inner circumferential surface of the cap assembly or of the outer circumferential surface of the seating portion. In other words, the respective portion may correspond to the said values.

In some embodiments, the at least one first engagement portion may include a plurality of first engagement portions or, in other words, two or more first engagement portions, and the at least one second engagement portion may include a plurality of second engagement portions or, in other words, two or more second engagement portions respectively corresponding to the plurality of first engagement portions or, in other words, two or more first engagement portions.

In some embodiments, each of the at least one first engagement portion or each of the at least one second engagement portion may include a protrusion extending in a second direction perpendicular to a first direction in which the sidewall portion extends, and a width of the protrusion in the first direction may decrease with increasing distance from the sidewall portion.

In some embodiments, a vertical cross-section of the protrusion may have a curved shape. In some embodiments, the vertical cross-section of the protrusion may have a substantially semicircular shaper.

In some embodiments, a vertical cross-section of the protrusion may be formed to have diagonal straight lines. The width of the protrusion may be uniformly decreased based on the vertical cross-section of the protrusion. Additionally, or alternatively, the vertical cross-section of the protrusion may have a combination of straight lines and curves. In other words, the shape of the protrusion may be appropriately changed such that, relative to the direction (X-axis) in which the sidewall extends, the width of the protrusion decreases with increasing distance from the sidewall portion.

According to some embodiments of the present disclosure, a method for manufacturing a battery includes preparing a case that includes a bottom portion, a sidewall portion connected to the bottom portion and having a seating portion at one end thereof, and an upper opening opposite to the bottom portion, preparing an electrode assembly, inserting the electrode assembly into the case and coupling a cap assembly to the seating portion of the case, wherein the cap assembly includes at least one second engagement portion for coupling with the case, the case includes at least one first engagement portion respectively corresponding to the at least one second engagement portion, the seating portion including the at least one first engagement portion, and the at least one first engagement portion and the at least one second engagement portion are coupled to each other to restrict movement of the cap assembly in an upward direction.

In some embodiments, the method may further include welding, after the coupling of the cap assembly, a region where the cap assembly is adjacent to the seating portion in a state where the at least one first engagement portion and the at least one second engagement portion are coupled.

In some embodiments, the coupling of the cap assembly may include coupling the at least one second engagement portion of the cap assembly and the at least one first engagement portion of the case through an interference fit. In other words, the at least one first engagement portion and the at least one second engagement portion may be configured to form an interference fit together. The battery may include an interference fit formed by the at least one first engagement portion and the at least one second engagement portion when coupled together.

In some embodiments, each of the at least one first engagement portion may include a protrusion having a protruding shape, and each of the at least one second engagement portion may include a receiving portion having a groove shape configured to receive the corresponding first engagement portion. In other words, the receiving portion of the at least one second engagement portion may have a groove shape configured to receive the protrusion of the corresponding first engagement portion or, in other words, the shape of the protrusion and the shape of the receiving portion may correspond to each other so that they fit together.

In some embodiments, each of the at least one first engagement portion may include the protrusion, a first upper flat portion formed on an upper side of the protrusion, and a first lower flat portion formed on a lower side of the protrusion. In some embodiments, each of the at least one second engagement portion may include the receiving portion, a second upper flat portion formed on an upper side of the receiving portion, and a second lower flat portion formed on a lower side of the receiving portion. In a state where the at least one first engagement portion and the at least one second engagement portion are coupled together, or in other words where the corresponding first engagement portion is received in the receiving portion, the protrusion may face the receiving portion, the first upper flat portion may face the second upper flat portion, and the first lower flat portion may face the second lower flat portion.

In some embodiments, each of the at least one second engagement portion may include a protrusion having a protruding shape, and each of the at least one first engagement portion may include a receiving portion having a groove shape configured to receive the corresponding second engagement portion. In other words, the receiving portion of the at least one first engagement portion may have a groove shape configured to receive the protrusion of the corresponding second engagement portion or, in other words, the shape of the protrusion and the shape of the receiving portion may correspond to each other so that they fit together.

In some embodiments, each of the at least one first engagement portion may include the receiving portion, a first upper flat portion formed on an upper side of the receiving portion, and a first lower flat portion formed on a lower side of the receiving portion. In some embodiments, each of the at least one second engagement portion may include the protrusion, a second upper flat portion formed on an upper side of the protrusion, and a second lower flat portion formed on a lower side of the protrusion. In a state where the at least one first engagement portion and the at least one second engagement portion are coupled together, or in other words where the corresponding second engagement portion is received in the receiving portion, the receiving portion may face the protrusion, the first upper flat portion may face the second upper flat portion, and the first lower flat portion may face the second lower flat portion.

In some embodiments, the electrode assembly may include a first electrode, a second electrode, and a separator between the first electrode and the second electrode. The inserting of the electrode assembly may include connecting a first electrode tab connected to the first electrode of the electrode assembly to the bottom portion of the case and connecting a second electrode tab connected to the second electrode of the electrode assembly to the cap assembly.

According to some embodiments of the present disclosure, the movement of the cap assembly in the downward direction may be limited by the inclined portion in the seating portion of the case. Further, the movement of the cap assembly in the upward direction may be limited by the engagement between the first engagement portion formed in the seating portion and the second engagement portion in the cap assembly. Accordingly, the position of the cap assembly may be fixed while the case and the cap assembly are coupled, which may enable reliable welding of the case and the cap assembly, even without a step of tack-welding. In other words, the seating portion may include an inclined portion for seating the cap assembly. In one embodiment, the inclined portion may slope downward in an inward direction of the case from the first engagement portion.

According to some embodiments of the present disclosure, the movement of the cap assembly in the downward direction may be limited by the sloped shape of the seating portion of the case and the cap assembly. Additionally, the movement of the cap assembly in the upward direction may be limited by the engagement between the first engagement portion formed in the seating portion and the second engagement portion formed in the cap assembly, thereby allowing for reliable welding of the case and the cap assembly. In other words, an inner circumferential surface of the seating portion may be sloped such that an inner diameter of the case increases toward the top of the sidewall portion. In other words, the seating portion may include a sloped shape. In some embodiments, an outer circumferential surface of the cap assembly may have a shape corresponding to the inner circumferential surface of the seating portion so as to be in close contact with the seating portion of the case. In other words, the outer circumferential surface of the cap assembly may be sloped such that an outer diameter of the cap assembly increases toward the top.

According to some embodiments of the present disclosure, the movement of the cap assembly in the downward direction may be limited by the extension of the cap assembly being seated on the upper end surface of the seating portion, and the movement of the cap assembly in the upward direction may be limited by the engagement between the first engagement portion formed in the seating portion and the second engagement portion formed in the cap assembly. Accordingly, reliable welding of the case and the cap assembly can be achieved. In other words, the the cap assembly may include an extension. The extension may be at the top of the second engagement portion. The extension may be shaped to protrude outwardly beyond the second engagement portion such that a stepped portion is formed on the outer circumferential surface of the cap assembly in the downward direction. Accordingly, the extension of the cap assembly may extend over (e.g., overhang) an upper end surface of the seating portion of the case, thereby allowing the cap assembly to be seated securely on the case.

According to some embodiments of the present disclosure, the seating portion may be at one end of the sidewall portion of the case, and the seating portion may include a substantially 'L' shaped configuration of an outer surface of the sidewall portion. For example, the outer surface of the seating portion may include a first surface parallel (or substantially parallel) to the direction of extension of the sidewall portion of the case and a second surface extending perpendicular (or substantially perpendicular) to the first surface. The cap assembly may include an extension corresponding to the 'L' shaped seating portion for coupling with the case. The extension may extend downward from an outer circumferential surface of the cap assembly to protrude downward beyond a lower surface of the cap assembly. A lower end surface of the extension may be seated on the second surface of the seating portion.

According to some embodiments of the present disclosure, the movement of the cap assembly in the downward direction may be limited by the lower end surface of the extension of the cap assembly being seated on the second surface of the seating portion, and the movement of the cap assembly in the upward direction may be limited by the engagement between the first engagement portion formed in the seating portion and the second engagement portion formed in the cap assembly. Accordingly, reliable welding of the case and the cap assembly can be achieved.

According to some embodiments of the present disclosure, the welding zones for fixing the cap assembly to the case are formed along the circumference of the side surface of the case, which may allow for horizontal and diagonal welding, thereby improving the convenience of the welding process.

According to some embodiments of the present disclosure, since the welding zones of the case and the cap assembly are formed relatively far from the electrode assembly accommodated within the case, the risk of damage to the electrode assembly due to welding heat can be minimized.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a longitudinal cross-sectional view illustrating an example of a battery according to one embodiment of the present disclosure.
FIG. 2 is an enlarged cross-sectional view illustrating an example in which a case is coupled to a cap assembly according to one embodiment of the present disclosure.
FIG. 3 is an enlarged cross-sectional view illustrating an example in which a case is coupled to a cap assembly according to one embodiment of the present disclosure.
FIG. 4 is an enlarged cross-sectional view illustrating an example in which a case is coupled to a cap assembly according to one embodiment of the present disclosure.
FIG. 5 is an enlarged cross-sectional view illustrating an example in which a case is coupled to a cap assembly according to one embodiment of the present disclosure.
FIG. 6 is an enlarged cross-sectional view illustrating an example in which a case is coupled to a cap assembly according to one embodiment of the present disclosure.
FIG. 7 is an enlarged cross-sectional view illustrating an example in which a first engagement portion is coupled with a second engagement portion according to one embodiment of the present disclosure.
FIG. 8 is an enlarged cross-sectional view illustrating an example in which a first engagement portion is coupled with a second engagement portion according to one embodiment of the present disclosure.
FIG. 9 illustrates an arrangement of a seating portion and a first engagement portion according to one embodiment of the present disclosure.
FIG. 10 illustrates an arrangement of a seating portion and a second engagement portion according to one embodiment of the present disclosure.
FIG. 11 illustrate an arrangement of a seating portion and a second engagement portion according to one embodiment of the present disclosure.
FIG. 12 is a flowchart illustrating a method for manufacturing a battery according to one embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

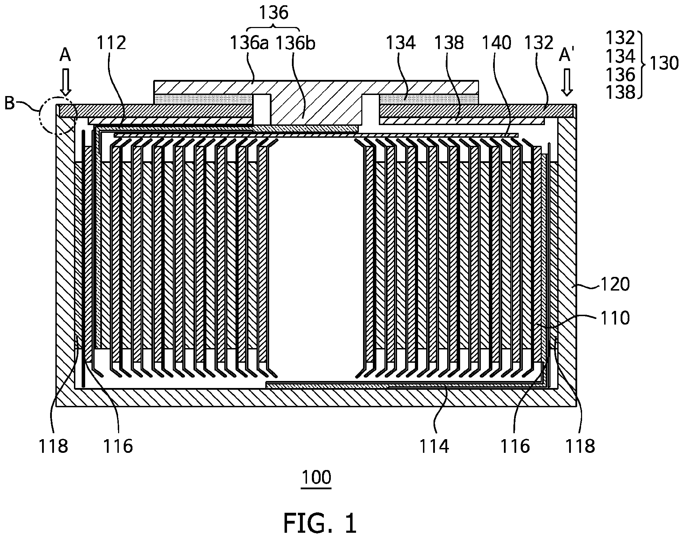

In the present disclosure, the sizes and the relative sizes of regions shown in FIGS. 1 to 12 may be exaggerated for clarity of explanation. That is, the sizes shown in FIGS. 1 to 12 are for the sake of convenience of understanding and are not intended to limit the scope of the present disclosure. Furthermore, throughout the specification, like reference numerals will be given to like parts.

FIG. 1 is a longitudinal cross-sectional view illustrating an example of a battery 100 according to one embodiment of the present disclosure. The battery 100 may include an electrode assembly 110, a case 120, a cap assembly 130, and an insulating washer 140.

The battery 100 may be a coin-type battery or a button-type battery. For example, the battery 100 may have a cylindrical shape. However, the shape of the battery 100 is not limited thereto, and the battery 100 may have a prismatic shape, a pouch shape, a cylindrical shape, or the like. In one embodiment, the battery 100 is a rechargeable secondary battery that can be charged and discharged.

The electrode assembly 110 may include a first electrode, a second electrode, and a separator. In one or more embodiments, the electrode assembly 110 may be configured by winding the first electrode and the second electrode together with the separator between the first electrode and the second electrode. The electrode assembly 110 may be wound to have a winding core, and the winding core may have a through-hole therein.

The first electrode may include a first substrate and a first active material layer on the first substrate. A first electrode tab 112 may extend outward from a first uncoated portion of the first substrate where the first active material layer is not applied, and the first electrode tab 112 may be electrically connected to a terminal plate 136 of the cap assembly 130.

The second electrode may include a second substrate and a second active material layer on the second substrate. A second electrode tab 114 may extend outward from a second uncoated portion of the second substrate where the second active material layer is not applied, and the second electrode tab 114 may be electrically connected to the case 120. The first electrode tab 112 and the second electrode tab 114 may extend in opposite directions from each other. In another embodiment, the first electrode tab 112 and the second electrode tab 114 may extend in the same direction.

In one embodiment, each of the first electrode tab 112 and the second electrode tab 114 may be covered with a cover tape. The cover tape may include an insulating material. The insulating material may be configured to provide electrical insulation to prevent current from passing therethrough. The cover tape may prevent (or at least mitigate) a short circuit from occurring at the first electrode tab 112 and the second electrode tab 114.

The first electrode may be configured to serve as a positive electrode. In this embodiment, the first substrate may be composed of, for example, aluminum foil, and the first active material layer may include, for example, a transition metal oxide. The second electrode may be configured to serve as a negative electrode. In this embodiment, the second substrate may be composed of, for example, copper foil or nickel foil, and the second active material layer may include, for example, graphite.

The separator may be configured to function to prevent a short circuit between the first electrode and the second electrode while allowing movement of lithium ions therebetween. The separator may be composed of, for example, a polyethylene film, a polypropylene film, a polyethylene-polypropylene film, or the like, but the scope of the present disclosure is not limited thereto.

Referring to FIG. 1, the first electrode tab 112 of the first electrode may be on one side (e.g., the upper side) of the electrode assembly 110. The second electrode tab 114 of the second electrode may be on the other side (e.g., the lower side) of the electrode assembly 110. However, the scope of the present disclosure is not limited thereto. For example, the first electrode tab 112 and the second electrode tab 114 may be formed on one side of the electrode assembly 110.

The battery 100 may include the electrode assembly 110 and an outer housing that accommodates the electrode assembly 110. The outer housing of the battery 100 may include the case 120 and the cap assembly 130 and may constitute an outer shape of the battery 100.

The case 120 may accommodate the electrode assembly 110 and an electrolyte. The case 120 may include a substantially cylindrical sidewall portion and a bottom portion connected to one side (e.g., a lower edge) of the sidewall portion. However, the case 120 is not limited thereto, and the case 120 may be configured in various shapes such as a circular shape, a pouch shape, or the like. In addition, the case may be composed of metal such as aluminum, an aluminum alloy, or nickel-plated steel, or a laminated film or plastic used for a pouch.

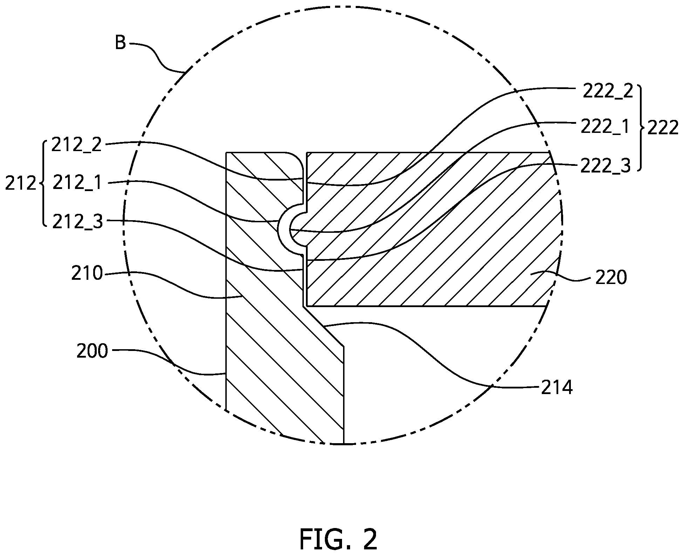

The case 120 may be configured to accommodate the electrode assembly 110. The electrode assembly 110 may be inserted into the case 120 through an opening formed at one side (e.g., the upper side) of the case 120. The opening of the case 120 may then be closed by the cap assembly 130. The cap assembly 130 may be coupled to one side of the case 120. For example, the cap assembly 130 may be preliminary fixed by being initially coupled to one end of the sidewall portion of the case 120. Thereafter, regions where the case 120 and the cap assembly 130 are in contact may be welded, so that the opening of the case 120 can be sealed by the cap assembly 130. Examples in each of which the cap assembly 130 and one end of the sidewall portion of the case 120 are coupled will be described in detail later with reference to FIGS. 2 to 11.

Referring to FIG. 1, the opening of the case 120 may be sealed by the cap assembly 130 by performing welding in welding zones A and A'. The separator of the electrode assembly 110 may be longer in a height direction of the electrode assembly 110 compared to the first electrode and the second electrode. Since a negative electrode substrate 116 surrounds an outer circumferential surface of the electrode assembly 110, one end of the separator of the electrode assembly 110 may be distant from the welding zones A and A'. Similarly, due to the negative electrode substrate 116, the first electrode tab 112 of the electrode assembly 110 may be distant from the welding zones A and A'. As a result, the separator may be positioned not to be pinched between the case 120 and the cap assembly 130 and may not be damaged by the welding performed in the welding zones A and A'. Additionally, the risk of short-circuiting due to damage to the first electrode tab 112 from the welding in the welding zones A and A' can be prevented.

The cap assembly 130 may include a cap plate 132, an insulating layer 134, a terminal plate 136, and an insulating member 138. The cap plate 132 may cover the opening of the case 120. The cap plate 132 may be coupled to a side surface of the case 120 corresponding to a side surface of the opening.

An insertion hole may be in the cap plate 132. In one or more embodiments, the insertion hole may be at approximately the center of the cap plate 132. The terminal plate 136 (e.g., an insertion portion 136b of the terminal plate 136) may be inserted into the insertion hole and coupled to the cap plate 132. The terminal plate 136 may include a body portion 136a and the insertion portion 136b protruding from the body portion 136a. The insertion portion 136b of the terminal plate 136 may be inserted into the insertion hole of the cap plate 132. Further, the insertion portion 136b of the terminal plate 136 may be connected to the first electrode tab 112 by contacting the first electrode tab 112. Referring to FIG. 1, the cap assembly 130 including the terminal plate 136 may be coupled to the case 120 such that the insertion portion 136b of the terminal plate 136 faces the electrode assembly 110.

The insulating layer 134 may be between the terminal plate 136 and the cap plate 132. The insulating layer 134 may have adhesive properties to bond the terminal plate 136 and the cap plate 132. The insulating layer 134 may be formed of an insulating material to electrically insulate the terminal plate 136 and the cap plate 132 from each other.

In one embodiment, the insulating member 138 may be on a lower surface of the cap plate 132. An upper surface of the cap plate 132 may face the body portion 136a of the terminal plate 136, and the lower surface of the cap plate 132 may face the electrode assembly 110. The insulating member 138 may be formed of an insulating material to provide insulation between the cap plate 132 and the electrode assembly 110 or between the cap plate 132 and the first electrode tab 112.

In one embodiment, the electrode assembly 110 may include the negative electrode substrate 116 surrounding the outer circumferential surface thereof. In this embodiment, the negative electrode substrate 116 may be formed of the same material as the substrate of the second electrode. In an alternative embodiment, the substrate of the second electrode in the electrode assembly 110 may be extended and wound to wrap around the outer circumferential surface of the electrode assembly. In this embodiment, the substrate of the second electrode may be configured to function as the negative electrode substrate.

In one embodiment, the electrode assembly 110 may include a sealing tape 118 that surrounds at least a portion of the outermost circumferential surface of the electrode assembly 110 (i.e., at least a portion of the outer circumferential surface of the negative electrode substrate 116). The sealing tape 118 may be configured to secure the wound electrode assembly 110. For example, the winding of the first electrode, the second electrode, and the separator in the electrode assembly 110 can be retained without unwinding due to the sealing tape 118. The sealing tape 118 may have adhesive properties so that the sealing tape is bonded to at least a portion of the outermost circumferential surface of the electrode assembly 110. The sealing tape 118 may include an insulating material. For example, the sealing tape may contain at least one of polyimides (PI), polyethylene (PE), or polystyrene (PS).

In one embodiment, the first electrode tab 112 may be bent under the terminal plate 136 within the case 120 where the electrode assembly 110 is accommodated and the cap assembly 130 is coupled. The bent first electrode tab 112 may be prevented from short-circuiting with the electrode assembly 110 by the insulating washer 140. The insulating washer 140 may be between the electrode assembly 110 and the terminal plate 136. In one or more embodiments, the insulating washer 140 may be between the electrode assembly 110 and the first electrode tab 112 that is located below the terminal plate 136. The insulating washer 140 may include an insulating material. By providing the insulating washer 140, the first electrode tab 112 may be spaced apart from the electrode assembly 110. Further, the insulating washer 140 may be configured to provide electrical insulation between the first electrode tab 112 and the electrode assembly 110.

FIG. 2 is an enlarged cross-sectional view illustrating an example in which a case 200 is coupled to a cap assembly 220 according to one embodiment of the present disclosure. FIG. 2 is an enlarged partial cross-sectional view of a region B shown in FIG. 1. For convenience of explanation, in a direction in which a sidewall portion of the case 200 extends, a direction toward a portion where the cap assembly 220 is coupled is referred to an upward direction, and the opposite direction is referred to as a downward direction.

The case 200 may include a bottom portion and the sidewall portion extending vertically upward from the bottom portion along a circumference of the bottom portion. At an upper end of the sidewall portion of the case 200, a seating portion 210 may be formed along a circumference of the sidewall portion. The seating portion 210 may be provided at a location where the cap assembly 220 is coupled to the sidewall portion.

In one embodiment, the seating portion 210 may include a first engagement portion 212 for coupling with the cap assembly 220. The first engagement portion 212 may be on an inner circumferential surface of the seating portion 210 and oriented in a direction opposite to an outer circumferential surface of the cap assembly 220 (e.g., the first engagement portion 212 may face inward).

In one embodiment, the seating portion 210 may further include an inclined portion 214 for seating the cap assembly 220. The inclined portion 214 is on the inner circumferential surface of the seating portion 210 and may be below the first engagement portion 212. The inclined portion 214 may be below a region where the outer circumferential surface of the cap assembly 220 and the seating portion 210 face each other in a state where the case 200 is coupled with the cap assembly 220.

In one embodiment, the inclined portion 214 may slope downward in an inward direction of the case 200 from the first engagement portion 212. Accordingly, an inner diameter of the case 200 may be reduced from the inclined portion 214 toward the bottom of the sidewall portion, thereby limiting movement of the cap assembly 220 in the downward direction.

In FIG. 2, the inclined portion 214 is illustrated as sloping downward from the first engagement portion 212. However, the present disclosure is not limited thereto, and the inclined portion 214 may be suitably altered in various forms to limit the movement of the cap assembly 220 in the downward direction. For example, the inclined portion 214 may extend in a direction perpendicular (or substantially perpendicular) to a direction of extension of the sidewall portion.

The cap assembly 220 may include a second engagement portion 222 for coupling with the case 200. The second engagement portion 222 may be on the outer circumferential surface of the cap assembly 220 and oriented in a direction opposite to the seating portion 210 of the case 200 (e.g., the second engagement portion 222 may face outward).

The cap assembly 220 may be coupled with the seating portion 210 formed at the upper end of the sidewall portion of the case 200. For example, the cap assembly 220 may be seated on top of the inclined portion 214 of the seating portion 210. The first engagement portion 212 of the seating portion 210 may be engaged with the second engagement portion 222 of the cap assembly 220 so as to be in close contact with each other. Accordingly, the cap assembly 220 may be preliminary fixed to the upper end of the sidewall portion of the case 200. In this coupling state, an upper end surface of the sidewall portion of the case 200 may be flush (or substantially flush) with an upper surface of the cap assembly 220.

In one embodiment, the first engagement portion 212 of the seating portion 210 and the second engagement portion 222 of the cap assembly 220 may have a complementary engagement structure formed with mutually corresponding shapes and sizes. For example, the first engagement portion 212 of the seating portion 210 may include a receiving portion 212_1 having a groove shape, a first upper flat portion 212_2 on an upper side of the receiving portion 212_1, and a first lower flat portion 212_3 on a lower side of the receiving portion 212_1. Additionally, the second engagement portion 222 of the cap assembly 220 may include a protrusion 222_1 that protrudes to engage with the first engagement portion 212, a second upper flat portion 222_2 on an upper side of the protrusion 222_1, and a second lower flat portion 222_3 on a lower side of the protrusion 222_1. In this embodiment, in a state where the first engagement portion 212 is coupled with the second engagement portion 222, the receiving portion 212_1 may face the protrusion 222_1, the first upper flat portion 212_2 may face the second upper flat portion 222_2, and the first lower flat portion 212_3 may face the second lower flat portion 222_3.

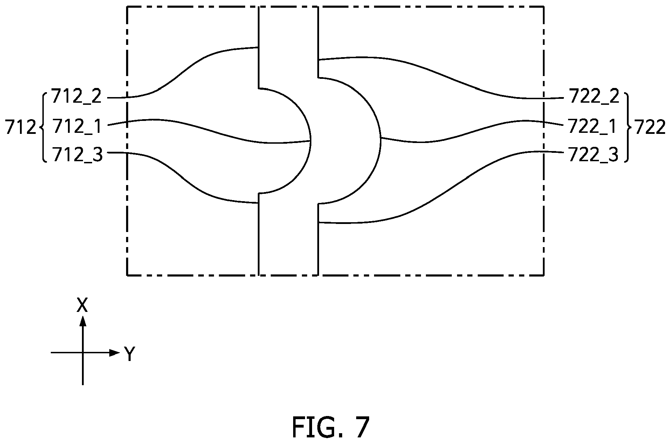

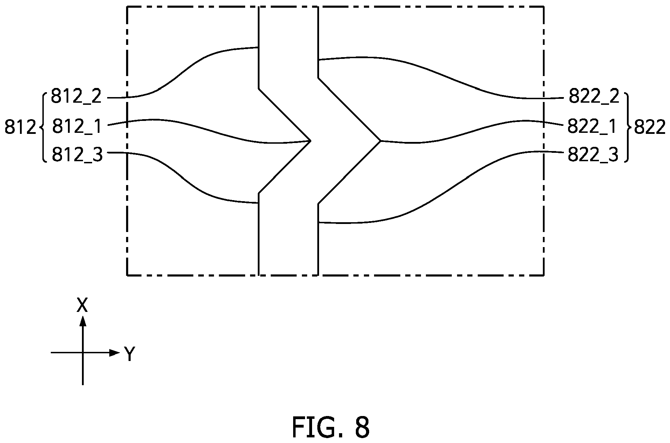

In one embodiment, the receiving portion 212_1 of the first engagement portion 212 and the protrusion 222_1 of the second engagement portion 222 may be coupled to each other with an interference fit. Accordingly, in a state where the first engagement portion 212 is coupled with the second engagement portion 222, the first engagement portion 212 and the second engagement portion 222 may be fixed in close contact with each other, thereby restricting the movement of the cap assembly 220 in the upward and downward directions. Embodiments of the shapes of the receiving portion 212_1 and the protrusion 222_1 will be described in more detail with reference to FIGS. 7 and 8.

In FIG. 2, the first engagement portion 212 is shown as including the single receiving portion 212_1 and the second engagement portion 222 is shown as including the single protrusion 222_1, but the present disclosure is not limited thereto. For example, the first engagement portion 212 may include a plurality of receiving portions 212_1 on a vertical cross-section thereof, and the plurality of receiving portions 212_1 may be vertically arranged on the vertical cross-section of the first engagement portion 212. Further, the second engagement portion 222 may include a plurality of protrusions 222_1 respectively corresponding to the plurality of receiving portions 212_1 on the vertical cross-section thereof, and the plurality of protrusions 222_1 may be vertically arranged on the vertical cross-section of the second engagement portion 222.

With this configuration, upward and downward movement of the cap assembly 220 may be limited while the case 200 and the cap assembly 220 are coupled to each other. The movement of the cap assembly 220 in the downward direction may be limited by the inclined portion 214 in the seating portion 210 of the case 200. Further, the movement of the cap assembly 220 in the upward direction may be limited by the engagement between the first engagement portion 212 in the seating portion 210 and the second engagement portion 222 in the cap assembly 220. Accordingly, the position of the cap assembly 220 may be fixed while the case 200 and the cap assembly 220 are coupled to each other, which may enable reliable welding of the case 200 and the cap assembly 220, even without performing a step of tack-welding.

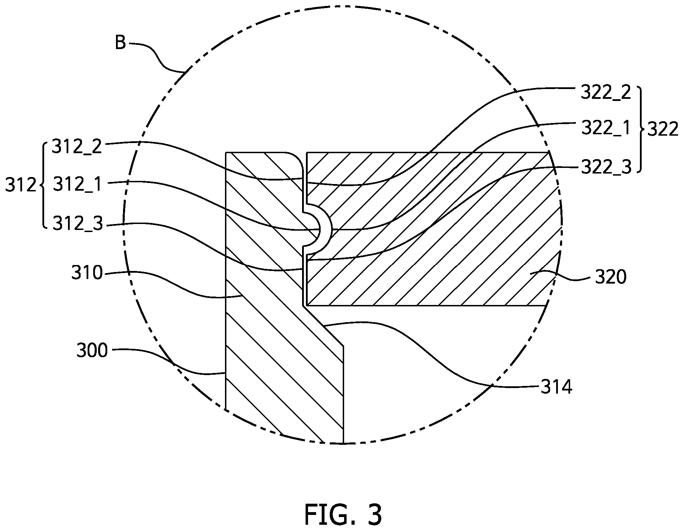

FIG. 3 is an enlarged cross-sectional view illustrating an example in which a case 300 is coupled to a cap assembly 320 according to one embodiment of the present disclosure.

FIG. 3 is an enlarged partial cross-sectional view of the region B shown in FIG. 1. For the convenience of explanation, in a direction in which a sidewall portion of the case 300 extends, a direction toward a portion where the cap assembly 320 is coupled is referred to as an upward direction, and the opposite direction is referred to as a downward direction. Further, in the description of FIG. 3, configurations described in or redundant to FIG. 2 will be omitted.

A seating portion 310 may be at one end of the sidewall portion of the case 300, and a first engagement portion 312 and an inclined portion 314 may be on an inner circumferential surface of the seating portion 310. The inclined portion 314 may be on a lower side of the first engagement portion 312.

The cap assembly 320 may include a second engagement portion 322 for coupling with the case 300. The second engagement portion 322 may be on an outer circumferential surface of the cap assembly 320 and oriented in a direction opposite to the seating portion 310 of the case 300.

The cap assembly 320 may be coupled with the seating portion 310 at an upper end of the sidewall portion of the case 300. For example, the cap assembly 320 may be seated on top of the inclined portion 314 of the seating portion 310. The first engagement portion 312 of the seating portion 310 may be engaged with the second engagement portion 322 of the cap assembly 320 so as to be in close contact with each other. Accordingly, the cap assembly 320 may be preliminary fixed to the upper end of the sidewall portion of the case 300. In this coupling state, an upper end surface of the sidewall portion of the case 300 may be flush (or substantially flush) with an upper surface of the cap assembly 320.

In one embodiment, the first engagement portion 312 of the seating portion 310 and the second engagement portion 322 of the cap assembly 320 may have a complementary engagement structure formed with mutually corresponding shapes and sizes. For example, the first engagement portion 312 of the seating portion 310 may include a protrusion 312_1, a first upper flat portion 312_2 on an upper side of the protrusion 312_1, and a first lower flat portion 312_3 on a lower side of the protrusion 312_1. Additionally, the second engagement portion 322 of the cap assembly 320 may include a receiving portion 322_1 having a groove shape to receive the first engagement portion 312, a second upper flat portion 322_2 on an upper side of the receiving portion 322_1, and a second lower flat portion 322_3 on a lower side of the receiving portion 322_1. In this embodiment, in a state where the first engagement portion 312 is coupled with the second engagement portion 322, the protrusion 312_1 may face the receiving portion 322_1, the first upper flat portion 312_2 may face the second upper flat portion 322_2, and the first lower flat portion 312_3 may face the second lower flat portion 322_3.

In FIG. 3, the first engagement portion 312 is shown as including the single protrusion 312_1 and the second engagement portion 322 is shown as including the single receiving portion 322_1, but the present disclosure is not limited thereto. For example, the first engagement portion 312 may include a plurality of protrusions 312_1, and the second engagement portion 322 may include a plurality of receiving portions 322_1 respectively corresponding to the plurality of protrusions 312_1. Additionally or alternatively, the first engagement portion 312 may include at least one protrusion and at least one receiving portion, and the second engagement portion 322 may include at least one receiving portion respectively corresponding to at least one protrusion of the first engagement portion 312 and at least one protrusion respectively corresponding to at least one receiving portion of the first engagement portion 312. In one or more embodiments, the shapes of the first engagement portion 312 and the second engagement portion 322 may be appropriately changed to have a complementary engagement structure formed with mutually corresponding shapes and sizes.

With this configuration, movement of the cap assembly 320 in the downward direction may be limited by the inclined portion 314 in the seating portion 310, and movement of the cap assembly 320 in the upward direction is limited by the engagement between the first engagement portion 312 and the second engagement portion 322, thereby enabling reliable welding of the case 300 and the cap assembly 320 to each other.

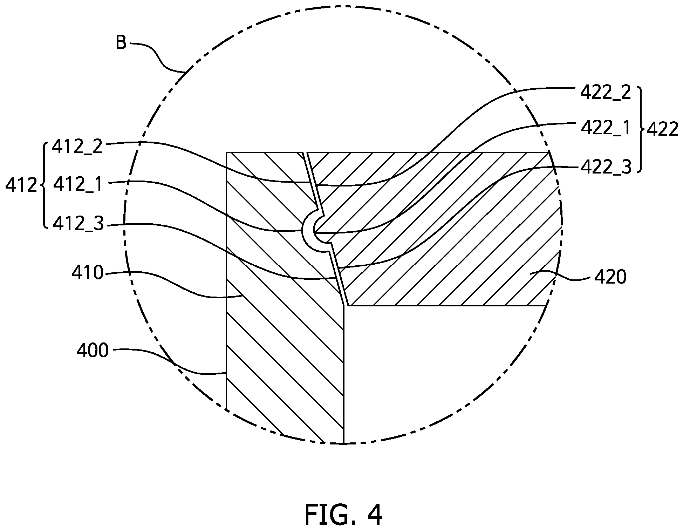

FIG. 4 is an enlarged cross-sectional view illustrating an example in which a case 400 is coupled to a cap assembly 420 according to one embodiment of the present disclosure. FIG. 4 is an enlarged partial cross-sectional view of the region B shown in FIG. 1. For the convenience of explanation, in a direction in which a sidewall portion of the case 400 extends, a direction toward a portion where the cap assembly 420 is coupled is referred to as an upward direction, and the opposite direction is referred to as a downward direction. Further, in the description of FIG. 4, configurations described in or redundant to FIGS. 2 and 3 will be omitted.

A seating portion 410 may be at one end of the sidewall portion of the case 400, and a first engagement portion 412 may be on an inner circumferential surface of the seating portion 410. The cap assembly 420 may include a second engagement portion 422 for coupling with the case 400. The second engagement portion 422 may be on an outer circumferential surface of the cap assembly 420 and oriented in a direction opposite to the seating portion 410 of the case 400 (e.g., the second engagement portion 422 may face outward).

In one embodiment, the inner circumferential surface of the seating portion 410 may be sloped such that an inner diameter of the case 400 increases toward the top of the sidewall portion. Additionally, the outer circumferential surface of the cap assembly 420 may have a shape corresponding to the inner circumferential surface of the seating portion 410 so as to be in close contact with the seating portion 410 of the case 400. The outer circumferential surface of the cap assembly 420 may be sloped such that an outer diameter of the cap assembly 420 increases toward the top. With this configuration, movement of the cap assembly 420 in the downward direction may be limited in a state where the cap assembly 420 is seated on the seating portion 410. Additionally, in this coupling state, an upper end surface of the sidewall portion of the case 400 may be flush (or substantially flush) with an upper surface of the cap assembly 420.

In one embodiment, the first engagement portion 412 of the seating portion 410 and the second engagement portion 422 of the cap assembly 420 may have a complementary engagement structure formed with mutually corresponding shapes and sizes. For example, the first engagement portion 412 of the seating portion 410 may include a receiving portion 412_1 having a groove shape, a first upper flat portion 412_2 on an upper side of the receiving portion 412_1, and a first lower flat portion 412_3 on a lower side of the receiving portion 412_1. In this embodiment, the first upper flat portion 412_2 and the first lower flat portion 412_3 may be sloped such that the inner diameter of the case increases toward the top of the sidewall portion. Additionally, the second engagement portion 422 of the cap assembly 420 may include a protrusion 422_1 that protrudes to engage with the first engagement portion 412, a second upper flat portion 422_2 on an upper side of the protrusion 422_1, and a second lower flat portion 422_3 on a lower side of the protrusion 422_1. In this embodiment, the second upper flat portion 422_2 and the second lower flat portion 422_3 may be sloped such that the outer diameter of the cap assembly 420 increases toward the top. Accordingly, in a state where the first engagement portion 412 is coupled with the second engagement portion 422, the receiving portion 412_1 may face the protrusion 422_1, the first upper flat portion 412_2 may face the second upper flat portion 422_2, and the first lower flat portion 412_3 may face the second lower flat portion 422_3.

In FIG. 4, the first engagement portion 412 is shown as including the receiving portion 412_1, and the second engagement portion 422 is shown as including the protrusion 422_1. However, the present disclosure is not limited thereto. For example, the first engagement portion 412 may include a protrusion, and the second engagement portion 422 may include a receiving portion corresponding to the protrusion of the first engagement portion 412. In one or more embodiments, the shapes of the first engagement portion 412 and the second engagement portion 422 may be appropriately changed to have a complementary engagement structure formed with mutually corresponding shapes and sizes.

With this configuration, movement of the cap assembly 420 in the downward direction may be limited by the sloped shape of the seating portion 410 and the cap assembly 420. Additionally, movement of the cap assembly 420 in the upward direction may be limited by the engagement between the first engagement portion 412 and the second engagement portion 422, thereby enabling reliable welding of the case 400 and the cap assembly 420.

Further, since the welding zones of the case 400 and the cap assembly 420 are relatively far from the electrode assembly accommodated within the case 400, the risk of damage to the electrode assembly due to welding heat can be minimized or at least reduced.

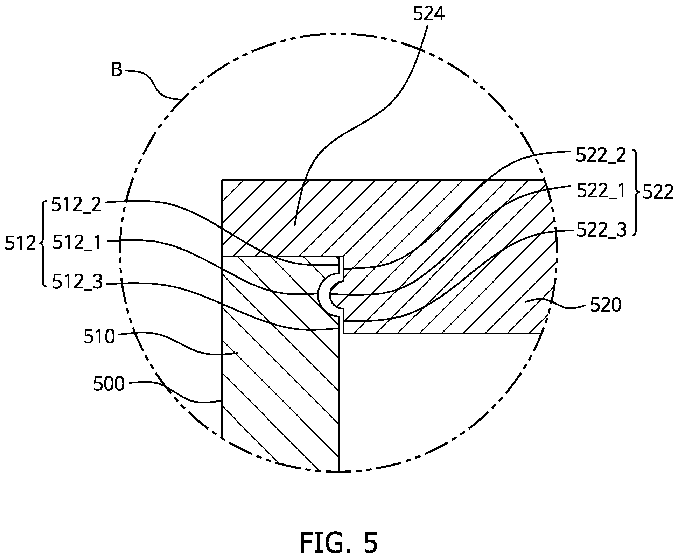

FIG. 5 is an enlarged cross-sectional view illustrating an example in which a case 500 is coupled to a cap assembly 520 according to one embodiment of the present disclosure. FIG. 5 is an enlarged partial cross-sectional view of the region B shown in FIG. 1. For the convenience of explanation, in a direction in which a sidewall portion of the case 500 extends, a direction toward a portion where the cap assembly 520 is coupled is referred to as an upward direction, and the opposite direction is referred to as a downward direction. Further, in the description of FIG. 5, configurations described in or redundant of FIGS. 2 to 4 will be omitted.

A seating portion 510 may be at one end of the sidewall portion of the case 500, and a first engagement portion 512 may be on an inner circumferential surface of the seating portion 510. The first engagement portion 512 may be on the inner circumferential surface of the seating portion 510 and oriented in a direction opposite to the cap assembly 520.

The cap assembly 520 may include a second engagement portion 522 and an extension 524 for coupling with the case 500. The second engagement portion 522 may be on an outer circumferential surface of the cap assembly 520 and oriented in a direction opposite to the seating portion 510 of the case 500 (e.g., the second engagement portion 522 may face outward). The extension 524 may be at the top of the second engagement portion 522. The extension 524 may be shaped to protrude outwardly beyond the second engagement portion 522 such that a stepped portion is formed on the outer circumferential surface of the cap assembly 520 in the downward direction. Accordingly, the extension 524 of the cap assembly 520 may extend over (e.g., overhang) an upper end surface of the seating portion 510 of the case 500, thereby allowing the cap assembly 520 to be seated securely on the case 500. With this configuration, in a state where the cap assembly 520 is seated on the seating portion 510, movement of the cap assembly 520 in the downward direction may be limited.

In one embodiment, the first engagement portion 512 of the seating portion 510 and the second engagement portion 522 of the cap assembly 520 may have a complementary engagement structure formed with mutually corresponding shapes and sizes. For example, the first engagement portion 512 of the seating portion 510 may include a receiving portion 512_1 having a groove shape, a first upper flat portion 512_2 on an upper side of the receiving portion 512_1, and a first lower flat portion 512_3 on a lower side of the receiving portion 512_1. Additionally, the second engagement portion 522 of the cap assembly 520 may include a protrusion 522_1 that protrudes to engage with the first engagement portion 512, a second upper flat portion 522_2 on an upper side of the protrusion 522_1, and a second lower flat portion 522_3 on a lower side of the protrusion 522_1. Accordingly, in a state where the first engagement portion 512 is coupled with the second engagement portion 522, the receiving portion 512_1 may face the protrusion 522_1, the first upper flat portion 512_2 may face the second upper flat portion 522_2, and the first lower flat portion 512_3 may face the second lower flat portion 522_3.

In FIG. 5, the first engagement portion 512 is shown as including the receiving portion 512_1, and the second engagement portion 522 is shown as including the protrusion 522_1. However, the present disclosure is not limited thereto. For example, the first engagement portion 512 may include a protrusion, and the second engagement portion 522 may include a receiving portion corresponding to the protrusion of the first engagement portion 512. In one or more embodiments, the shapes of the first engagement portion 512 and the second engagement portion 522 may be appropriately changed to have a complementary engagement structure formed with mutually corresponding shapes and sizes.

With this configuration, movement of the cap assembly 520 in the downward direction may be limited by the extension 524 of the cap assembly 520 being seated on the upper end surface of the seating portion 510, and movement of the cap assembly 520 in the upward direction may be limited by the engagement between the first engagement portion 512 and the second engagement portion 522. Accordingly, reliable welding of the case 500 and the cap assembly 520 can be achieved.

Further, with this configuration, the welding zones for fixing the cap assembly 520 to the case 500 are formed along a circumference of the side surface of the case 500, which may allow for horizontal and diagonal welding, thereby increasing the convenience of the welding process. Additionally, since the welding zones of the case 500 and the cap assembly 520 are relatively far from the electrode assembly accommodated within the case 500, the risk of damage to the electrode assembly due to welding heat can be minimized or at least reduced.

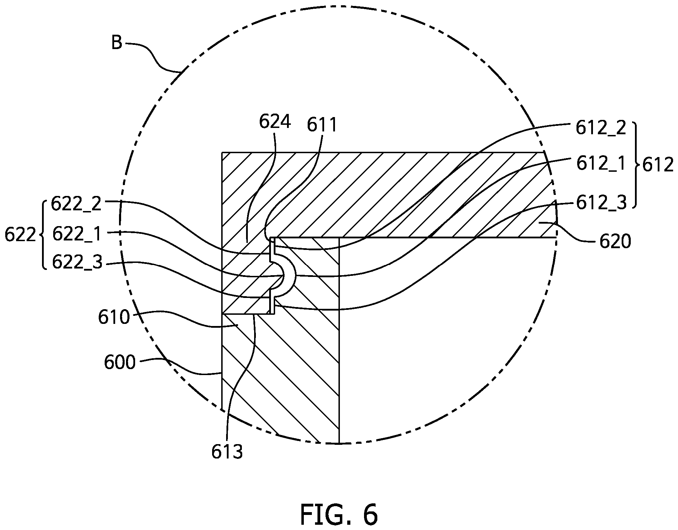

FIG. 6 is an enlarged cross-sectional view illustrating an example in which a case 600 is coupled to a cap assembly 620 according to one embodiment of the present disclosure. FIG. 6 is an enlarged partial cross-sectional view of the region B shown in FIG. 1. For the convenience of explanation, in a direction in which a sidewall portion of the case 600 extends, a direction toward a portion where the cap assembly 620 is coupled is referred to as an upward direction, and the opposite direction is referred to as a downward direction. Further, in the description of FIG. 6, configurations described in or redundant to FIGS. 2 to 5 will be omitted.

A seating portion 610 may be at one end of the sidewall portion of the case 600, and the seating portion 610 may include a substantially 'L' shaped configuration of an outer surface of the sidewall portion. For example, the outer surface of the seating portion 610 may include a first surface 611 parallel (or substantially parallel) to the direction of extension of the sidewall portion of the case 600 and a second surface 613 extending perpendicular (or substantially perpendicular) to the first surface 611. A first engagement portion 612 may be on the first surface 611 of the seating portion 610.

The cap assembly 620 may include a second engagement portion 622 and an extension 624 for coupling with the case 600. The extension 624 may extend downward from an outer circumferential surface of the cap assembly 620 to protrude downward beyond a lower surface of the cap assembly 620. A lower end surface of the extension 624 may be seated on the second surface 613 of the seating portion 610. With this configuration, in a state where the cap assembly 620 is seated on the seating portion 610, movement of the cap assembly 620 in the downward direction may be limited.

In one embodiment, the first engagement portion 612 of the seating portion 610 and the second engagement portion 622 of the cap assembly 620 may have a complementary engagement structure formed with mutually corresponding shapes and sizes. For example, the first engagement portion 612 of the seating portion 610 may include a receiving portion 612_1 having a groove shape, a first upper flat portion 612_2 on an upper side of the receiving portion 612_1, and a first lower flat portion 612_3 on a lower side of the receiving portion 612_1. Additionally, the second engagement portion 622 of the cap assembly 620 may include a protrusion 622_1 that protrudes to engage with the first engagement portion 612, a second upper flat portion 622_2 on an upper side of the protrusion 622_1, and a second lower flat portion 622_3 on a lower side of the protrusion 622_1. Accordingly, in a state where the first engagement portion 612 is coupled with the second engagement portion 622, the receiving portion 612_1 may face the protrusion 622_1, the first upper flat portion 612_2 may face the second upper flat portion 622_2, and the first lower flat portion 612_3 may face the second lower flat portion 622_3.

In FIG. 6, the first engagement portion 612 is shown as including the receiving portion 612_1, and the second engagement portion 622 is shown as including the protrusion 622_1. However, the present disclosure is not limited thereto. For example, the first engagement portion 612 may include a protrusion, and the second engagement portion 622 may include a receiving portion corresponding to the protrusion of the first engagement portion 512. In one or more embodiments, the shapes of the first engagement portion 612 and the second engagement portion 622 may be appropriately changed to have a complementary engagement structure formed with mutually corresponding shapes and sizes.

With this configuration, movement of the cap assembly 620 in the downward direction may be limited by the lower end surface of the extension 624 of the cap assembly 620 being seated on the second surface 613 of the seating portion 610, and movement of the cap assembly 620 in the upward direction may be limited by the engagement between the first engagement portion 612 and the second engagement portion 622. Accordingly, reliable welding of the case 600 and the cap assembly 620 can be achieved.

Further, with this configuration, the welding zones for fixing the cap assembly 620 to the case 600 are formed along a circumference of the side surface of the case 600, which may allow for horizontal and diagonal welding, thereby improving the convenience of the welding process.

FIG. 7 is an enlarged cross-sectional view illustrating an example in which a first engagement portion 712 is coupled with a second engagement portion 722 according to one embodiment of the present disclosure.

In one embodiment, the first engagement portion 712 may include a protrusion 712_1, a first upper flat portion 712_2 extending vertically (or substantially vertically) on an upper side of the protrusion 712_1, and a first lower flat portion 712_3 extending vertically (or substantially vertically) on a lower side of the protrusion 712_1.

In one embodiment, the protrusion 712_1 may protrude in a direction (Y-axis) perpendicular to a direction (X-axis) in which the sidewall portion of the case extends. The protrusion 712_1 may protrude beyond the first upper flat portion 712_2 and the first lower flat portion 712_3. Further, relative to the direction (X-axis) in which the sidewall portion extends, a width of the protrusion 712_1 may decrease with increasing distance from the sidewall portion.

In one embodiment, a vertical cross-section of the protrusion 712_1 may have a curved shape. In FIG. 7, the vertical cross-section of the protrusion 712_1 is shown to have a substantially semicircular shape, but the present disclosure is not limited thereto. For example, the vertical cross-section of the protrusion 712_1 may have various shapes, such as an elliptical shape, a parabolic shape, or the like.

In one embodiment, the second engagement portion 722 may have a complementary engagement structure formed with shapes and sizes corresponding to the first engagement portion 712. The second engagement portion 722 may include a receiving portion 722_1, a second upper flat portion 722_2 extending vertically (or substantially vertically) on an upper side of the receiving portion 722_1, and a second lower flat portion 722_3 extending vertically (or substantially vertically) on a lower side of the receiving portion 722_1.

In one embodiment, the receiving portion 722_1 may have a groove shape to receive the protrusion 712_1. The receiving portion 722_1 may be more recessed relative to the second upper flat portion 722_2 and the second lower flat portion 722_3. The second upper flat portion 722_2 may correspond to the first upper flat portion 712_2. The second lower flat portion 722_3 may correspond to the first lower flat portion 712_3.

In one embodiment, in a state where the first engagement portion 712 is coupled with the second engagement portion 722, the protrusion 712_1 may face the receiving portion 722_1, the first upper flat portion 712_2 may face the second upper flat portion 722_2, and the first lower flat portion 712_3 may face the second lower flat portion 722_3. Accordingly, in a state where the protrusion 712_1 and the receiving portion 722_1 are engaged, the first upper flat portion 712_2 and the second upper flat portion 722_2 face each other, thereby limiting movement of the protrusion 712_1 or the receiving portion 722_1 in the upward direction. Further, in a state where the protrusion 712_1 and the receiving portion 722_1 are engaged, the first lower flat portion 722_3 and the second lower flat portion 722_3 face each other, thereby limiting movement of the protrusion 712_1 or the receiving portion 722_1 in the downward direction.

FIG. 8 is an enlarged cross-sectional view illustrating an example in which a first engagement portion 812 is coupled with a second engagement portion 822 according to one embodiment of the present disclosure. In the description of FIG. 8, configurations described in or redundant to FIG. 7 will be omitted.

In one embodiment, the first engagement portion 812 may include a protrusion 812_1, a first upper flat portion 812_2 extending vertically (or substantially vertically) on an upper side of the protrusion 812_1, and a first lower flat portion 812_3 extending vertically (or substantially vertically) on a lower side of the protrusion 812_1. The second engagement portion 822 may include a receiving portion 822_1, a second upper flat portion 822_2 extending vertically (or substantially vertically) on an upper side of the receiving portion 822_1, and a second lower flat portion 822_3 extending vertically (or substantially vertically) on a lower side of the receiving portion 822_1.

In one embodiment, the protrusion 812_1 may protrude in a direction (Y-axis) perpendicular to a direction (X-axis) in which the sidewall portion of the case extends. The protrusion 812_1 may protrude beyond the first upper flat portion 812_2 and the first lower flat portion 812_3. In one embodiment, relative to the direction (X-axis) in which the sidewall portion extends, a width of the protrusion 812_1 may decrease with increasing distance from the sidewall portion.

In one embodiment, the receiving portion 822_1 has a groove shape to receive the protrusion 812_1. The receiving portion 822_1 may be more recessed relative to the second upper flat portion 822_2 and the second lower flat portion 822_3. The shape of the receiving portion 822_1 may correspond to the shape of the protrusion 812_1.

In one embodiment, a vertical cross-section of the protrusion 812_1 may be formed to have diagonal straight lines. In FIG. 8, the width of the protrusion 812_1 is illustrated to be uniformly decreased based on the vertical cross-section of the protrusion 812_1, but the present disclosure is not limited thereto. For example, based on the vertical cross-section of the protrusion 812_1, the rate of decrease in the width of the protrusion 812_1 may be suitably varied.

Additionally or alternatively, the vertical cross-section of the protrusion 812_1 may have a combination of straight lines and curves. In other words, the shape of the protrusion 812_1 may be appropriately changed such that, relative to the direction (X-axis) in which the sidewall extends, the width of the protrusion 812_1 decreases with increasing distance from the sidewall portion.

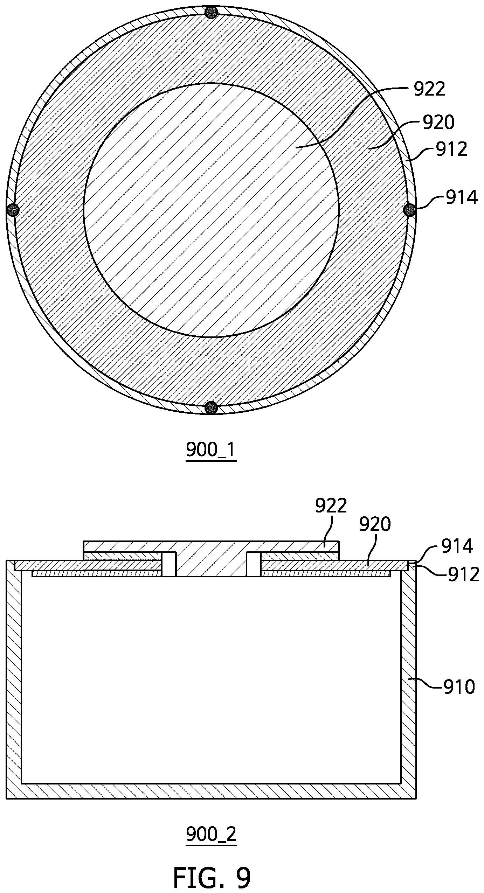

FIG. 9 illustrates an arrangement of a seating portion 912 and a first engagement portion 914 according to one embodiment of the present disclosure. A first arrangement view 900_1 is a plan view showing a case 910 and a cap assembly 920 are coupled together, and a second arrangement view 900_2 is a side view showing that the case 910 and the cap assembly 920 are coupled together.

The case 910 may include a bottom portion and a sidewall portion extending vertically upward along a circumference of the bottom portion. The seating portion 912 may be at an upper end of the sidewall portion of the case 910 along a circumference of the sidewall portion. The seating portion 912 may be at a location where the cap assembly 920 is coupled with the sidewall portion. The seating portion 912 may include a first engagement portion 914 for coupling with the cap assembly 920.

The cap assembly 920 may include a terminal plate 922 that is configured to serve as an electrode terminal connected to an electrode assembly accommodated in the case 910, and a second engagement portion for coupling with the case 910. The second engagement portion may be at a location corresponding to a location of the first engagement portion 914.

In one embodiment, the first engagement portion 914 of the case 910 may include a plurality of first engagement portions, and the second engagement portion of the cap assembly 920 may include a plurality of second engagement portions. In one or more embodiments, the plurality of second engagement portions may respectively correspond to the plurality of first engagement portions 914.

In FIG. 9, four first engagement portions 914 are shown arranged at regular or substantially regular intervals along an inner circumferential surface of the sidewall portion of the case 910, but the number and spacing of the first engagement portions 914 are not limited thereto.

Further, in FIG. 9, the seating portion 912 is formed along the entire circumference of the sidewall portion of the case 910, but the present disclosure is not limited thereto. For example, the seating portion 912 may be intermittently formed in at least a portion of the circumference of the sidewall portion of the case 910.

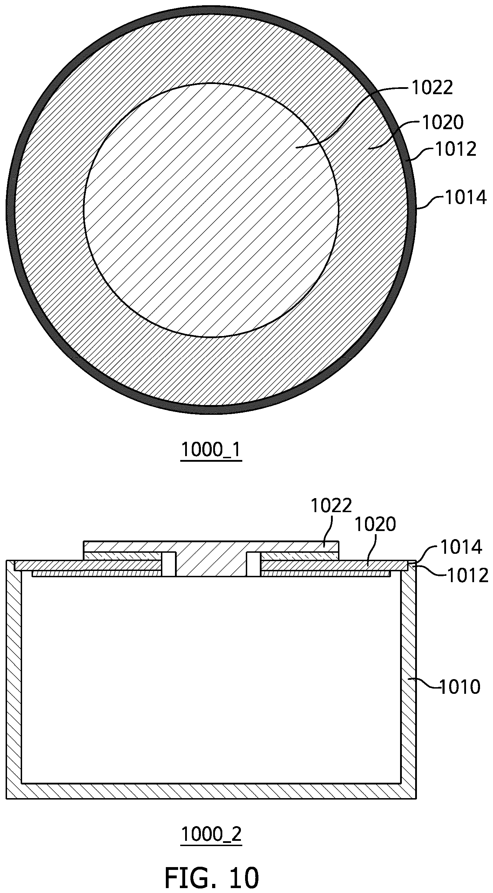

FIG. 10 illustrates an arrangement of a seating portion 1012 and a second engagement portion 1014 according to one embodiment of the present disclosure. The first arrangement 1000_1 is a plan view showing that a case 1010 and a cap assembly 1020 coupled together, and a second arrangement 1000_2 is a side view showing that the case 1010 and the cap assembly 1020 coupled together. In the description of FIG. 10, configurations described in or redundant to FIG. 9 will be omitted.

The seating portion 1012 may be at an upper end of a sidewall portion of the case 1010 along a circumference of the sidewall portion. The seating portion 1012 may have a first engagement portion 1014 for coupling with the cap assembly 1020. The cap assembly 1020 may include a terminal plate 1022 and a second engagement portion, and the second engagement portion may be at a location corresponding to a location of the first engagement portion 1014.

In one embodiment, the seating portion 1012 may extend along the circumference of the sidewall portion of the case 1010, and the first engagement portion 1014 may extend continuously along the seating portion 1012. Similarly, the second engagement portion of the cap assembly 1020 may extend continuously along a circumference of the cap assembly 1020 to correspond with the first engagement portion 1014.

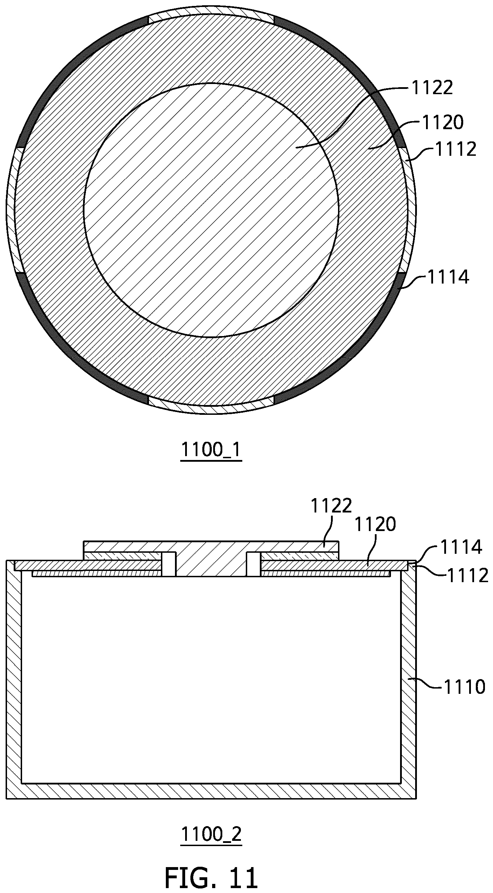

FIG. 11 illustrate an arrangement of a seating portion 1112 and a second engagement portion 1114 according to one embodiment of the present disclosure. A first arrangement view 1100_1 is a plan view showing a case 1110 and a cap assembly 1120 coupled together, and a second arrangement view 1100_2 is a side view showing the case 1110 and the cap assembly 1120 coupled together. In the description of FIG. 11, configurations described in or redundant to FIGS. 9 and 10 will be omitted.

The seating portion 1112 may be at an upper end of a sidewall portion of the case 1110 along a circumference of the sidewall portion, and the seating portion 1112 may have a first engagement portion 1114 for coupling with the cap assembly 1120. The cap assembly 1120 may include a terminal plate 1122 and a second engagement portion, and the second engagement portion may be at a location corresponding to a location of the first engagement portion 1114.

In one embodiment, the seating portion 1112 may extend along the circumference of the sidewall portion of the case 1110, and the first engagement portion 1114 may extend continuously along at least a portion of the circumference of the seating portion 1112. Similarly, the second engagement portion of the cap assembly 1120 may extend continuously along at least a portion of the circumference of the cap assembly 1120 to correspond with the first engagement portion 1114.

In FIG. 11, four sections in each of which the first engagement portion 1114 extend continuously are shown to be spaced apart at regular or substantially regular intervals along an inner circumferential surface of the sidewall portion of the case 910. However, the length, number, and spacing of the sections in each of which the first engagement portion 1114 extend continuously are not limited thereto.

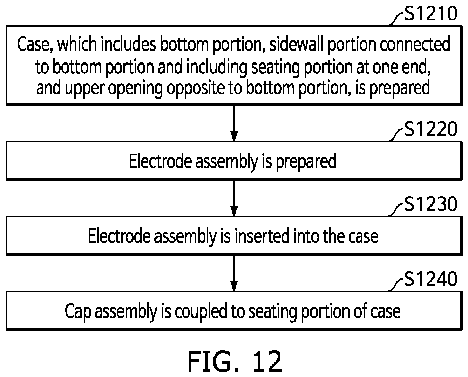

FIG. 12 is a flowchart illustrating a method for manufacturing a battery according to one embodiment of the present disclosure. The method for manufacturing the battery may begin with preparing a case including a bottom portion, a sidewall portion connected to the bottom portion and including a seating portion at one end, and an upper opening opposite to the bottom portion (step S1210).

Then, an electrode assembly may be prepared (step S1220). In one embodiment, the electrode assembly may include a first electrode, a second electrode, and a separator between the first electrode and the second electrode.

Next, the electrode assembly may be inserted into the case (step S1230). During the process of inserting the electrode assembly into the case, the first electrode tab connected to the first electrode of the electrode assembly may be connected to the bottom portion of the case, and the second electrode tab connected to the second electrode of the electrode assembly may be connected to the cap assembly.

Next, the cap assembly may be coupled to a seating portion of the case (step S1240). In one embodiment, the cap assembly may include at least one first engagement portion for coupling with the case. Further, the case may include at least one second engagement portion respectively corresponding to the at least one first engagement portion. The seating portion of the case may include the second engagement portion.

In one embodiment, the first engagement portion may include a protrusion, and the second engagement portion may include a receiving portion formed in a groove shape to receive the first engagement portion. In one or more embodiments, the first engagement portion may include the protrusion, a first upper flat portion on an upper side of the protrusion, and a first lower flat portion on a lower side of the protrusion. Further, the second engagement portion may include the receiving portion, a second upper flat portion on an upper side of the receiving portion, and a second lower flat portion on a lower side of the receiving portion. When the first engagement portion and the second engagement portion are coupled together, the protrusion may face the receiving portion, the first upper flat portion may face the second upper flat portion, and the first lower flat portion may face the second lower flat portion.

In another embodiment, the second engagement portion may include a protrusion, and the first engagement portion may include a receiving portion having a groove shape to receive the second engagement portion. In one or more embodiments, the first engagement portion may include a receiving portion, a first upper flat portion on an upper side of the receiving portion, and a first lower flat portion on a lower side of the receiving portion. Further, the second engagement portion may include a protrusion, a second upper flat portion on an upper side of the protrusion, and a second lower flat portion on a lower side of the protrusion. When the first engagement portion and the second engagement portion are coupled together, the receiving portion may face the protrusion, the first upper flat portion may face the second upper flat portion, and the first lower flat portion may face the second lower flat portion.

In one embodiment, the first engagement portion of the cap assembly and the second engagement portion of the case may be coupled together through an interference fit. In this embodiment, by coupling the first engagement portion with the second engagement portion, movement of the cap assembly in an upward direction may be restricted.

Thereafter, the cap assembly may be coupled to the seating portion of the case, and a region where the cap assembly is adjacent to the seating portion may be welded in a state where the first engagement portion and the second engagement portion are coupled together.

The flowchart and the above description of FIG. 12 are merely examples of the present disclosure, and the scope of the present disclosure is not limited to the flowchart and the above description of FIG. 12. For example, one or more of the steps in the flowchart and the above description may be added, altered, and/or deleted, the sequence of one or more of the steps may be changed (varied), and/or two or more of the steps may be performed simultaneously.

Although the present disclosure has been described above with respect to embodiments thereof, the present disclosure is not limited thereto. Various modifications and variations can be made thereto by those skilled in the art within and the equivalent scope of the appended claims.

### DESCRIPTION OF SOME REFERENCE SYMBOLS

- 100: battery
- 110: electrode assembly
- 112: first electrode tab
- 114: second electrode tab
- 116: negative electrode substrate
- 118: sealing tape
- 120: case
- 130: cap assembly
- 132: cap plate
- 134: insulating layer
- 136: terminal plate
- 136a: body portion
- 136b: insertion portion
- 138: insulating member
- 140: insulating washer

## Claims

1. A battery (100) comprising:
an electrode assembly (110);
a case (120, 200, 300, 400, 500, 600, 910, 1010, 1110) including a bottom portion, a sidewall portion connected to the bottom portion and including a seating portion (210, 310, 410, 510, 610, 912, 1012, 1112) at one end thereof, and an upper opening opposite to the bottom portion, the case (120, 200, 300, 400, 500, 600, 910, 1010, 1110) accommodating the electrode assembly (110); and
a cap assembly (130, 220, 320, 420, 520, 620, 920, 1020, 1120) coupled to the seating portion (210, 310, 410, 510, 610, 912, 1012, 1112) of the case (120, 200, 300, 400, 500, 600, 910, 1010, 1110),
wherein the cap assembly (130, 220, 320, 420, 520, 620, 920, 1020, 1120) includes at least one second engagement portion (222, 322, 422, 522, 622, 722, 822) for coupling with the case (120, 200, 300, 400, 500, 600, 910, 1010, 1110),
wherein the case (120, 200, 300, 400, 500, 600, 910, 1010, 1110) includes at least one first engagement portion (212, 312, 412, 512, 612, 712, 812, 914, 1014, 1114) corresponding to the at least one second engagement portion (222, 322, 422, 522, 614, 622, 722, 822), the seating portion (210, 310, 410, 510, 610, 912, 1012, 1112) including the at least one first engagement portion (212, 312, 412, 512, 612, 712, 812, 914, 1014, 1114), and
wherein the at least one first engagement portion (212, 312, 412, 512, 612, 712, 812, 914, 1014, 1114) and the at least one second engagement portion (222, 322, 422, 522, 622, 722, 822) are coupled to each other to restrict movement of the cap assembly (130, 220, 320, 420, 520, 620, 920, 1020, 1120) in an upward direction.

2. The battery (100) as claimed in claim 1, wherein the at least one second engagement portion (222, 322, 422, 522, 622, 722, 822) of the cap assembly (130, 220, 320, 420, 520, 620, 920, 1020, 1120) and the at least one first engagement portion (212, 312, 412, 512, 612, 712, 812, 914, 1014, 1114) of the case (120, 200, 300, 400, 500, 600, 910, 1010, 1110) are coupled together by an interference fit.

3. The battery (100) as claimed in claim 1 or 2, wherein each of the at least one first engagement portion (312, 712, 812) comprises a protrusion (312_1, 712_1, 812_1) having a protruding shape, and each of the at least one second engagement portion (322, 722, 822) comprises a receiving portion (322_1, 722_1, 822_1) having a groove shape configured to receive a corresponding first engagement portion (312, 712, 812) of the at least one first engagement portion (312, 712, 812).

4. The battery (100) as claimed in claim 3, wherein each of the at least one first engagement portion (312, 712, 812) comprises the protrusion (312_1, 712_1, 812_1), a first upper flat portion (312_2, 712_2, 812_2) on an upper side of the protrusion (312_1, 712_1, 812_1), and a first lower flat portion (312_3, 712_3, 812_3) on a lower side of the protrusion (312_1, 712_1, 812_1),
wherein each of the at least one second engagement portion (322, 722, 822) comprises the receiving portion (322_1, 722_1, 822_1), a second upper flat portion (322_2, 722_2, 822_2) on an upper side of the receiving portion (322_1, 722_1, 822_1), and a second lower flat portion (322_3, 722_3, 822_3) on a lower side of the receiving portion (322_1, 722_1, 822_1), and
wherein, in a state where the at least one first engagement portion (312, 712, 812) and the at least one second engagement portion (322, 722, 822) are coupled together, the protrusion (312_1, 712_1, 812_1) faces the receiving portion (322_1, 722_1, 822_1), the first upper flat portion (312_2, 712_2, 812_2) faces the second upper flat portion (322_2, 722_2, 822_2), and the first lower flat portion (312_3, 712_3, 812_3) faces the second lower flat portion (322_3, 722_3, 822_3).

5. The battery (100) as claimed in any one of claims 1 to 4, wherein each of the at least one second engagement portion (222, 422, 522, 622) comprises a protrusion (222_1, 422_1, 522_1, 622_1) having a protruding shape, and each of the at least one first engagement portion (212, 412, 512, 612) comprises a receiving portion (212_1, 412_1, 512_1, 612_1) having groove shape configured to receive a corresponding second engagement portion (222, 422, 522, 622) of the at least one second engagement portion (222, 422, 522, 622).

6. The battery (100) as claimed in claim 5, wherein each of the at least one first engagement portion (212, 412, 512, 612) comprises the receiving portion (212_1, 412_1, 512_1, 612_1), a first upper flat portion (212_2, 412_2, 512_2, 612_2) on an upper side of the receiving portion (212_1, 412_1, 512_1, 612_1), and a first lower flat portion (212_3, 412_3, 512_3, 612_3) on a lower side of the receiving portion (212_1, 412_1, 512_1, 612_1),
wherein each of the at least one second engagement portion (222, 422, 522, 622) comprises the protrusion (222_1, 422_1, 522_1, 622_1), a second upper flat portion (222_2, 422_2, 522_2, 622_2) on an upper side of the protrusion (222_1, 422_1, 522_1, 622_1), and a second lower flat portion (222_3, 422_3, 522_3, 622_3) on a lower side of the protrusion (222_1, 422_1, 522_1, 622_1), and
wherein, in a state where the at least one first engagement portion (212, 412, 512, 612) and the at least one second engagement portion (222, 422, 522, 622) are coupled together, the receiving portion (212_1, 412_1, 512_1, 612_1) faces the protrusion (222_1, 422_1, 522_1, 622_1), the first upper flat portion (212_2, 412_2, 512_2, 612_2) faces the second upper flat portion (222_2, 422_2, 522_2, 622_2), and the first lower flat portion (212_3, 412_3, 512_3, 612_3) faces the second lower flat portion (222_3, 422_3, 522_3, 622_3).

7. The battery (100) as claimed in any one of claims 1 to 6, wherein the at least one second engagement portion (222, 322, 422, 522, 722, 822) is on an outer circumferential surface of the cap assembly (130, 220, 320, 420, 520, 920, 1020, 1120), and wherein the at least one first engagement portion (212, 312, 412, 512, 712, 812, 914, 1014, 1114) is on an inner circumferential surface of the seating portion (210, 310, 410, 510, 912, 1012, 1112).

8. The battery (100) as claimed in claim 7, wherein each of the at least one second engagement portion (222, 322, 422, 522, 722, 822) extends substantially continuously along at least a portion of the outer circumferential surface of the cap assembly (130, 220, 320, 420, 520, 920, 1020, 1120), and wherein each of the at least one first engagement portion (212, 312, 412, 512, 712, 812, 914, 1014, 1114) extends substantially continuously along at least a portion of the inner circumferential surface of the seating portion (210, 310, 410, 510, 912, 1012, 1112).

9. The battery (100) as claimed in any one of claims claim 1 to 6, wherein the at least one second engagement portion (622) is on an inner circumferential surface of the cap assembly (620), and the at least one first engagement portion (612) is on an outer circumferential surface of the seating portion (610).

10. The battery (100) as claimed in claim 9, wherein each of the at least one second engagement portion (622) extends substantially continuously along at least a portion of the inner circumferential surface of the cap assembly (620), and wherein each of the at least one first engagement portion (612) extends substantially continuously along at least a portion of the outer circumferential surface of the seating portion (610).

11. The battery (100) as claimed in any one of claims 1 to 10, wherein the at least one first engagement portion (212, 312, 412, 512, 612, 712, 812, 914, 1014, 1114) comprises a plurality of first engagement portions (212, 312, 412, 512, 612, 712, 812, 914, 1014, 1114), and
wherein the at least one second engagement portion (222, 322, 422, 522, 622, 722, 822) comprises a plurality of second engagement portions (222, 322, 422, 522, 622, 722, 822) respectively corresponding to the plurality of first engagement portions (212, 312, 412, 512, 612, 712, 812, 914, 1014, 1114).

12. The battery (100) as claimed in any one of claims 1 to 11, wherein each of the at least one first engagement portion (712) or each of the at least one second engagement portion comprises a protrusion (712_1) extending in a second direction perpendicular to a first direction in which the sidewall portion extends, and
wherein a width of the protrusion (712_1) in the first direction decreases with increasing distance from the sidewall portion.

13. A method for manufacturing a battery (100) comprising:
Preparing (S1210) a case (120, 200, 300, 400, 500, 600, 910, 1010, 1110) comprising a bottom portion, a sidewall portion connected to the bottom portion and having a seating portion (210, 310, 410, 510, 610, 912, 1012, 1112) at one end thereof, and an upper opening opposite to the bottom portion;
preparing (S1220) an electrode assembly (110);
inserting (S1230) the electrode assembly (110) into the case (120, 200, 300, 400, 500, 600, 910, 1010, 1110); and
coupling (S1240) a cap assembly (130, 220, 320, 420, 520, 620, 920, 1020, 1120) to the seating portion (210, 310, 410, 510, 610, 912, 1012, 1112) of the case (120, 200, 300, 400, 500, 600, 910, 1010, 1110),
wherein the cap assembly (130, 220, 320, 420, 520, 620, 920, 1020, 1120) comprises at least one second engagement portion (222, 322, 422, 522, 622, 722, 822) for coupling with the case (120, 200, 300, 400, 500, 600, 910, 1010, 1110),
wherein the case (120, 200, 300, 400, 500, 600, 910, 1010, 1110) comprises at least one first engagement portion (212, 312, 412, 512, 612, 712, 812, 914, 1014, 1114) respectively corresponding to the at least one second engagement portion (222, 322, 422, 522, 614, 622, 722, 822), the seating portion (210, 310, 410, 510, 610, 912, 1012, 1112) comprising the at least one first engagement portion (212, 312, 412, 512, 612, 712, 812, 914, 1014, 1114), and
wherein the at least one first engagement portion (212, 312, 412, 512, 612, 712, 812, 914, 1014, 1114) and the at least one second engagement portion (222, 322, 422, 522, 622, 722, 822) are coupled to each other to restrict movement of the cap assembly (130, 220, 320, 420, 520, 620, 920, 1020, 1120) in an upward direction.

14. The method as claimed in claim 13, further comprising:
welding, after the coupling of the cap assembly (130, 220, 320, 420, 520, 620, 920, 1020, 1120), a region where the cap assembly (130, 220, 320, 420, 520, 620, 920, 1020, 1120) is adjacent to the seating portion (210, 310, 410, 510, 610, 912, 1012, 1112) in a state where the at least one first engagement portion (212, 312, 412, 512, 612, 712, 812, 914, 1014, 1114) and the at least one second engagement portion (222, 322, 422, 522, 622, 722, 822) are coupled.

15. The method as claimed in claim 13 or 14, wherein the coupling of the cap assembly (130, 220, 320, 420, 520, 620, 920, 1020, 1120) comprises coupling the at least one second engagement portion (222, 322, 422, 522, 622, 722, 822) of the cap assembly (130, 220, 320, 420, 520, 620, 920, 1020, 1120) and the at least one first engagement portion (212, 312, 412, 512, 612, 712, 812, 914, 1014, 1114) of the case (120, 200, 300, 400, 500, 600, 910, 1010, 1110) to each other through an interference fit.
